# EUROPEAN PATENT APPLICATION

(11) **EP 4 492 678 A1**
(43) Date of publication of application: **15.01.2025**
(21) Application number: 24188364.4
(22) Date of filing: 12.07.2024
(51) Int. Cl.: H02S 20/23, F24S 25/61, F24S 25/613, F24S 25/632, H02S 30/00

(54) **SOLAR PANEL INSTALLATION SYSTEM AND METHOD**

(30) Priority: 12.07.2023 NL 2035358
(71) Applicant: Roef B.V., 4104 BG Culemborg (NL)
(72) Inventor: SCHALING, Hendrik Philip Ferdinand, 3773 BH Barneveld (NL)
(74) Representative: EP&C

(57) **Abstract**

A solar panel installation system comprises an installation bracket, which comprises a base plate, the base plate being configured to be attached to a roof structure, and two hooks, a first hook and a second hook, arranged at two opposing sides of the base plate pointing to each other. The two hooks have an overhanging portion which overhang the base plate, the overhanging portion of the first hook is longer than the overhanging portion of the second hook.

## Description

The invention relates to a solar panel installation system and to a method for use of the solar panel installation system.

Solar energy is becoming an increasingly popular alternative to traditional energy sources. With this increase in popularity the demand for efficient and cost-effective solar panel installations is also growing. To place and secure a solar panel on a support structure solar panel installation systems are used. There are different types of support structures on which solar panels need to be installed, for example a slanted roof, e.g. the slanted roof of a house or an industrial building.

Commonly solar panels are attached using a solar panel installation system comprised of long metal rails onto which installation brackets are placed, which can be used to secure a number of solar panels, see for example WO2012014203A2. These type of solar panel installation systems use a lot of material and require a long installation time. There are also solar panel installation systems which use brackets which are able to engage two different solar panels at the same time, thus requiring a smaller number of installation brackets, see for example EP2327942A2 and WO2012014203A2. However, these systems require the installers to perform extra actions, e.g. securing the installation brackets to a support structure after engaging the installation bracket with a solar panel, e.g. first not fully securing the installation brackets such that they can be moved when placing the solar panels after which the brackets need to be secured to a support structure.

In DE20117398U1 a solar panel installation system and method according to the preamble of claim 1 are disclosed. The solar installation brackets each have a rigid part which comprises a base plate as well as first and second hooks which are pointing towards one another. The hooks have overhanging portions of equal length. The top surface of the bracket, centrally between the ends of the hooks, is formed with a rigid raised blocking portion. On each hook a spring element is mounted which projects below the underside of the overhanging portion of the hook. In use, a first solar panel frame portion is engaged by the second hook of the first pair of brackets as the inward flange is forced under the spring elements on the second hooks. Then the solar panel is slid in a direction towards the second pair of brackets so that the second frame portion is able to engage the first hook of the second pair of brackets. Then the solar panel is slid in a direction towards the first pair of brackets so that the second solar panel frame portion is engaged with the first hook of the second pair of brackets as the inward flange is forced under the spring elements on the first hooks. The solar panel is now blocked from moving to a disengaged position as the solar panel frame is locked between the rigid raised blocking portions of the brackets.

The spring elements mounted on the hooks of the installation bracket of DE20117398U1 bring along complexity, both during manufacturing and installation, as well as an increase of materials used. Also, the solar panel is then held effectively by these spring elements, which offers limited security and stability. The present invention aims to provide a solar panel installation system which limits the amount of materials used for the installation of solar panels e.g. in view of the increasing demand of solar panels that need to be installed.

The present invention aims to provide a solar panel installation system which provides for a stable and secure mounting of the solar panel.

A further object of the invention is to provide a solar panel installation system which enables a solar panel installation method which decreases the number of actions required by the installers to limit the installation time and effort required.

A further object of the invention is to provide a solar panel installation system which enables a solar panel installation on a roof, e.g. a slanted roof, e.g. a lightly slanted roof, e.g. having an inclination between 1 and 5 degrees.

The present invention provides a method for the installation of a solar panel on a support structure, e.g. a roof, the solar panel comprising a solar panel frame having a first frame portion and an opposed second frame portion which frame portions each comprise an inward flange, wherein the method comprises:
- attaching of a first pair of a solar panel installation brackets and a second pair of solar panel installation brackets to the roof in an arrangement allowing a solar panel frame to be secured by the four brackets,

wherein each solar panel installation bracket comprises:
   - a base plate configured to be attached to the roof, the base plate having a top surface and two longitudinal sides;
   - a first hook integrated with the base plate and extending from the base plate, the first hook comprising a first overhanging portion having an overhang length, which overhangs a part of the top surface of the base plate,
   - a second hook integrated with the base plate and extending from the base plate, the second hook comprising a second overhanging portion having an overhang length, which overhangs a part of the top surface of the base plate,
wherein the overhanging portions of the first hook and second hook are pointing toward each other, each hook having an underside of the overhanging portion and an inner surface, wherein the method further comprises:
   - engaging the first solar panel frame portion with the second hook of the first pair of brackets,
   - sliding the solar panel in a direction towards the second pair of brackets so that the second frame portion is able to engage the first hook of the second pair of brackets,
   - sliding the solar panel in a direction towards the first pair of brackets so that the second solar panel frame portion is engaged with the first hook of the second pair of brackets.

The inventive method is characterized in that:
- each solar panel installation bracket is a rigid solar panel installation bracket, and each hook is configured to engage with the underside of the overhanging portion thereof directly on the respective inward flange of the solar panel frame whilst the solar panel frame rests on a portion of the top surface of the rigid bracket,

and in that the first overhanging portion of the first hook has a larger overhang length than the second overhang length of the second overhanging portion of the second hook, so that - upon said sliding of the solar panel in the direction towards the first pair of brackets until the first frame portion comes to rest against the inner surface of the second hook - the second frame portion remains engaged by the first hooks of the first pair of brackets,
and wherein the method further comprises the use of blocking members, each associated with a respective solar panel installation bracket, so as to block the engaged parts of the inward flanges from moving to a disengaged position.

Compared, for example, to the installation method and bracket of DE20117389 the solar panel is not held in vertical direction by spring elements. This avoids, for example, problems that may arise from wind inducing up and down vibrations of the solar panel. Such vibration is not effectively controlled when the solar panel is held down by spring elements. Also, such spring elements may deteriorate over time, e.g. the mentioned vibrations leading to fatigue of the spring elements. In the inventive approach, the inward flange is held directly between the underside of the hook and the top surface of the bracket, so that the panel is rigidly held in vertical direction, so absent of spring elements acting on the inward flanges.

In the rigid bracket design, the difference in overhanging length of the opposed hooks of a bracket enhances ease of installation, as the second frame portion remains engaged by the first hooks of the first pair of brackets when sliding the solar panel in the direction towards the first pair of brackets until the first frame portion comes to rest against the inner surface of the second hook.

In the inventive approach, further use is made of blocking members, each associated with a respective solar panel installation bracket, so as to block the engaged parts of the inward flanges from moving to a disengaged position. As will be explained herein, a variety of blocking members is envisaged.

In practical embodiments, the first overhanging portion of the first hook has an overhang length between 15 and 25 mm, e.g. a length of 19 millimeters, and the second overhanging portion of the second hook has an overhang length between 5 and 10 mm, e.g. a length of 7 millimeters.

In practical embodiments, a vertical distance between the underside of an overhanging portion of the first hook and of the second hook and the top surface of the base plate is between 1 mm and 3 mm, for example 1.5 mm. It will be appreciated that the distance is preferably chosen to match the thickness of the inward flange of the solar panel frame.

In practical embodiments, an outer edge of the overhanging portion of the first hook and of the second hook comprises a bevelled edge, which bevelled edge is configured to help guide the inward flange of the solar panel frame into engagement with the hook.

In embodiments, the blocking members comprises blocking clips which are separate from the brackets and are placed on the respective bracket between the overhanging portions of the first hook and the second hook after the inward flanges of the solar panel frame are engaged with the hooks.

In embodiments, the blocking member is a blocking clip made of an elastically deformable material, for example spring steel, said blocking clip being mounted to the bracket to protrude above the top surface in an unloaded main position of the blocking clip wherein the blocking clip prevents an inward flange of the solar panel frame from moving to a disengaged position, which blocking clip is elastically deformable into a lowered position when the solar panel frame rests thereon prior to engaging an inward flange with the respective hook. It will be appreciated that such a blocking clip only has to counter a horizontal shifting of the solar panel, and plays no role like the spring elements in DE20117398U1 to hold down the solar panels.

In embodiments, the blocking member is a bendable lip of the bracket, which is bend from a non-blocking configuration into a blocking configuration wherein the bendable lip prevents an inward flange of the solar panel frame from moving to a disengaged position. For example, the bracket is made of sheet metal and the bendable lip is bendable into an upright blocking configuration.

In embodiments, e.g. in addition to other blocking members, the blocking member comprises a clamping member and an associated bolt, which clamping member is configured to engage onto a top of the solar panel frame and wherein tightening the bolt causes the solar panel frame to be clamped against the bracket. For example, such clamping assemblies are mounted only at the perimeter of a field of solar panels, as an extra securing measure, e.g. in view of heavy wind loading during a storm.

The present invention also relates to a solar panel installation system according to claim 8.

The rigid solar panel installation bracket according to the invention reduces the amount of installation material used and the installation time of a solar panel. Having a longer overhang length of the first overhanging portion compared to the overhang length of the second overhanging portion allows for a solar panel to engage the second hook of an upper installation bracket, while already being engaged by the first hook of a lower installation bracket, without needing to perform additional actions which would be needed in case the installation brackets would have hooks with equal overhang lengths, e.g. securing the installation brackets to a support structure after engaging the installation bracket with a solar panel, or by using non-rigid solar panel installation brackets, e.g. made of spring steel or having hooks of spring steel, which provide less security and stability.

In an embodiment, the first overhanging portion of the first hook has an overhang length between 15 and 25 mm, e.g. a length of 19 millimetres, and the second overhanging portion of the second hook has an overhang length between 5 and 10 mm, e.g. a length of 7 millimetres. These dimensions are optimal for use with most commercially available solar panels that have a solar panel frame with an inward flange, at least at opposed portions thereof. The hooks then engage on the inward flange portions. For example, when installing solar panels on a slanted roof, hooks of two lower brackets engage on the lower frame portion having an inward flange and hooks of two upper brackets on the upper frame portion having an inward flange, so that one solar panel is held by four hooks of four brackets.

The system allows for a quick and efficient installation of solar panels on a support structure, for example a slanted roof, by limiting the number of actions that an installer needs to perform. Using the system the installer can first attach all installation brackets on the support structure, e.g. securing the brackets directly to the roof without any rails, e.g. using rivets that attach to a metal face of insulated roof panels, after which all solar panels can be securely attached to the installation brackets, without the need to perform complex installation actions.

In an embodiment, the first and second hook are arranged at two opposing ends of the base plate. As discussed herein, in embodiments, the base plate can be extended beyond the first and/or the second hook, e.g. to provide for a securing portion allowing the base plate to be secured to the support structure and/or to provide for a cable management formation(s) allowing to retain electrical cable(s) associated with the solar panel(s).

In an embodiment, the base plate has a width and the first and second hook have each a width equal to the width of the base plate. This allows for a rigid connection when a portion of a solar panel frame is secured, e.g. clamped, by a hook of the installation bracket. For example, the bracket is primarily formed as a section that is severed, e.g. sawed, from a metal extrusion profile that defines the vertical cross-sectional shape of the bracket.

In embodiments, the installation bracket is made from sheet metal, e.g. folded out of a single piece of sheet metal. For example, the sheet metal is galvanized steel sheet metal. In embodiments the installation bracket is of steel, e.g. steel sheet metal, which is coated, e.g. powder coated or coated otherwise.

In an embodiment, a vertical distance between the underside of an overhanging portion of the first hook and/or of the second hook and the top surface of the base plate is between 1 mm and 3 mm, for example 1.5 mm. These dimensions correspond to the inward flange thickness of commercially available solar panels. The vertical distance between an overhanging portion and the top surface is configured such that the solar panel frame portion is rigidly held without the need for any spring element holding down the panel as in DE20117398U1.

In an embodiment, the outer edge of the overhanging portion of the first hook and of the second hook comprises a bevelled edge. This bevelled edge is configured to help guide a solar panel frame portion during engaging of a hook by a solar panel frame portion. The bevelled edge acts as guide by directing and aligning the solar panel frame portion into the first and second hook, increasing the ease and efficiency of the installation process. For example, during installation the solar panel frame portion is slid over the overhanging portion of the second hook and must be guided under the overhanging portion of the second hook. The bevelled edge of the rigid hook will guide the frame portion downward under the overhanging portion and allow the frame portion to engage with the overhanging portion.

In an embodiment, the top surface of the base plate has a centrally raised surface, e.g. between 30 - 60 percent of the base plate is centrally raised, e.g. 40 percent. This centrally raised surface allows the solar panel frame to be pivotally moved during the insertion of a solar panel frame portion in the first or second hook of the bracket, e.g. the solar panel can be tilted while engaged with the first and/or second hook, allowing for easier engagement of the solar panel frame with a second installation bracket. The centrally raised surface of the base plate and an underside of the overhanging portion of the first and/or second hook are configured to support the solar panel frame portion, e.g. a solar panel frame portion rests between the underside of the overhanging portion and the centrally raised surface of the base plate.

In an embodiment, the system further comprises a blocking member configured to prevent the solar panel frame flange from becoming disengaged from the respective hook.

In an embodiment, the blocking member is configured to be placed between the overhanging portions of the first hook and the second hook such that the blocking member engages on, e.g. abuts the base plate, for example the longitudinal sides of the base plate. in an embodiment, the blocking member is substantially rigid with an elastic portion allowing for elastic deformation caused by the installer in order to securely attach the blocking member to the base plate.

In an embodiment, the blocking member is engaged with, or configured to be engaged with, the base plate and is placed between the overhanging portions of the first hook and the second hook and prevents a received portion of the solar panel frame from disengaging from the first hook and/or the second hook.

By placing the blocking member between the overhanging portions of the first hook and the second hook, the blocking member prevents that a received portion of the solar panel frame, e.g. the inward flange portion, disengages from the first and/or the second hook. Preferably, the blocking member is placed between the overhanging portions of the first hook and the second hook after at least one of the hooks of the bracket is engaged by a solar panel frame.

In an embodiment, the blocking member is a blocking clip.

In an embodiment, the blocking member is a blocking clip made of an elastically deformable material, for example spring steel, said blocking clip comprising a middle portion, a first end and a second end, wherein one of the ends of the blocking clip engages with a receiving portion of the base plate. The blocking clip comprises a main position configured to prevent a received portion of the solar panel frame from disengaging from the first hook and/or the second hook, and wherein the blocking clip comprises an elastically deformed lowered position configured to enable a portion of the solar panel frame to engage with the first and/or the second hook. This configuration of the blocking clip allows the clip the be installed on the installation bracket before engaging of the solar panel frame portion by a first and/or second hook.

In an embodiment, the blocking clip has a main position for blocking a solar panel frame portion from disengaging and a lowered position, wherein - in the blocking position - a section of the middle portion extends substantially above the top surface of the centrally raised surface such that a received portion of the solar panel frame is prevented from disengaging from the first and/or second hook, and the first and second ends both engage the first and second blocking clip engagement portions respectively. In the lowered position, each section of the middle portion is located level with or below the top surface of the centrally raised surface such that the solar panel frame can engage the first and second hook and wherein the one of the first or second outer ends is disengaged from the first or second blocking clip engagement portions respectively. The blocking clip is configured to be moved from the blocking position to the lowered position, e.g. is downwardly elastically deformed, by applying a downward force on the middle portion of the blocking clip, e.g. by lying a solar panel frame on the middle portion of the blocking clip, and wherein - once there is no downward force acting on the middle portion anymore - the blocking clip moves from the lowered position to the blocking position.

In an embodiment, the middle portion of the blocking clip comprises a substantially vertical blocking segment and a slanted segment, wherein the blocking segment extends substantially vertically from the first outer end, such that - in the blocking position- a significant section of the blocking segment is located vertically above the top surface of the centrally raised surface. The slanted segment extends between the blocking segment and the second outer end of the blocking clip. The first outer end engages a lower surface of the first blocking clip engagement portion such that - when the blocking clip is moved from the blocking position to the lowered position - the first outer end disengages the lower surface of the first blocking clip engagement portion. The second outer end fixedly engages the second blocking clip engagement portion, e.g. remains engaged in both the blocking and lowered position.

In an embodiment, the second blocking clip engagement portion comprises a lower part and an upper part which are spaced apart from each other to form a receiving space between them, wherein the second outer end of the blocking clip is configured to be placed in the receiving space. The upper part, or a portion thereof, is configured to plastically deform when a significant downward force is applied thereon, such that - when the second outer end is placed in the receiving space and the upper part or a portion thereof is plastically deformed - the second blocking clip engagement portion fixedly engages the second outer end.

In an embodiment, the blocking clip comprises a recess at its first end, which recess is clamped by the receiving portion of the base plate, preferably wherein the second end of the blocking clip is configured to slide downwards when the middle portion of the blocking clip is pressed, and the blocking clip deforms into the lowered position. This enables the blocking clip to be pre-installed onto the installation bracket before use. For example, during manufacturing of the blocking clip and/or the installation bracket, the blocking clip having a recess is inserted into the receiving portion of the base plate. A ridge of the receiving portion is then bent into the recess of the blocking clip to couple the clip and the installation bracket and prevent the two from disengaging. This prevents the blocking clip from sliding sideways during use of the installation bracket.

In an embodiment, the blocking clip comprises a curved outer end, for example curved in form of a hook. The curved outer end is configured to move between an upper position while the blocking clip is in the main position and a lower position while the blocking clip is in the elastically deformed lowered position. The top surface of the base plate limits the range of motion of the blocking clip between an uppermost and lowermost position.

In an embodiment, a centrally raised surface of the top surface comprises a notch, said notch having a notch surface. The notch extends between the two longitudinal sides of the base plate. The base plate further comprises two notch overhanging portions which overhang the notch surface. For example, a blocking clip can be clamped between the notch overhanging portions of the centrally raised surface and the notch surface, e.g. the inner protrusions of the blocking clip can be placed in between the notch overhanging portion of the centrally raised surface and the notch surface thereby securing the blocking clip to the bracket.

In an embodiment, the blocking clip is substantially U-shaped and is configured to be clamped between the notch overhanging portions of the centrally raised surface and the notch surface, the blocking clip comprising a base portion and two parallel extending portions. Each extending portion, or leg portion, of the blocking clip may have an inner protrusion extending from an inner surface and/or an outer protrusion extending from an outer surface of the extending portion. The inner protrusion may be used to securely attach the blocking clip to the solar panel installation bracket, e.g. the bracket comprising a cooperating indentation in the base plate. The outer protrusions can be used to more easily handle the blocking clip, e.g. attach and detach the blocking clip from the bracket.

In an embodiment, the blocking clip is substantially L-shaped and is configured to be clamped between the notch overhanging portions of the centrally raised surface and the notch surface. The blocking clip comprises a base portion and an extending portion, wherein the notch surface of the bracket comprises a recess, wherein the base portion has an angled portion which can engage with a corresponding recess of the notch surface. When the blocking clip is slidably engaged with the bracket, the angled portion of the blocking clip falls into the recess of the notch surface. This requires an upward force and a sideward force to disengage said blocking clip.

In an embodiment, the angled surface of the base portion of the blocking clip comprises a through-hole, e.g. in the center of said angled portion, configured to receive a fastener, e.g. a screw. To disengage the blocking clip a tool, e.g. a screwdriver, can be used to lift the angled portion by inserting the tool through the through-hole and generating an upward force on said angled portion.

In an embodiment, the system further comprises a blocking member which comprises a nut, a bolt, and a clamping member. For example, the nut is configured to engage with the two notch overhanging portions such that the blocking member is held between the notch overhanging portions of the centrally raised surface. Herein the blocking member is configured to clamp a solar panel frame portion by means of the clamping member and prevent a received portion of the solar panel frame from disengaging from the first hook and/or the second hook and/or prevent a solar panel from sliding sideways. This configuration enables the engaged solar panel frame portions to be rigidly clamped and prevent the solar panels frame from sliding sideways out of the installation bracket. The bolt variant is, for example, envisaged for use on the outermost installation brackets in a solar panel grid or field.

In an embodiment, the top surface of the base plate comprises multiple ridges, preferably the ridges being of the same height. The ridges, preferably, extend between the two longitudinal sides of the base plate. Preferably, the received part of the solar panel frame rests upon said ridges, thereby allowing for a more even distribution of the forces on the base plate by the solar panel frame portion. Preferably, the raised ridges are arranged on the centrally raised surfaces. Additionally, the ridges may prevent water pooling on the bracket.

In an embodiment, the second hook comprises a resting portion which extends in the opposite direction of the second overhanging portion of the second hook. The resting portion is configured to allow a part of a solar panel frame to rest upon the resting portion of the second hook during the installation process. The resting portion of the second hook allows an installer to briefly and securely rest the solar panel frame during the installation process.

In an embodiment, the installation bracket is made of sheet metal. Manufacturing the installation bracket from a sheet of metal, for example a single sheet, allows for a fast and easily adjustable means of production.

In an embodiment, the solar panel installation bracket is generally U-shaped with a bottom and two side walls which make up the base plate as well as the hooks. For example, the U-shape is folded from sheet metal.

In an embodiment, the base plate comprises a bendable lip, e.g. the base plate being made of sheet metal, wherein the lip has a non-blocking configuration and a blocking configuration, e.g. when folded in an upright position, wherein in the blocking configuration the lip extends in between the overhanging portions of the first and the second hook and prevents a received portion of the solar panel frame from disengaging from the first hook and/or the second hook. For example, the bendable lip is part of a side wall or bottom of a U-shaped installation bracket.

In a non-blocking configuration, the blocking clip is, for example, extending outward or inward of the installation bracket and does not obstruct the insertion or removal of a solar panel frame portion in the receiving slit defined by the first hook and/or the second hook.

In an embodiment, the blocking lip comprises an opening, which opening can be engaged with a tool, for example a screwdriver, as to bend the lip from the non-blocking configuration into the blocking configuration, or to bend the lip from the blocking configuration into non-blocking configuration.

In an embodiment, the installation bracket is made of a single piece of sheet metal, e.g. using cutting and folding equipment, e.g. laser or waterjet cutting.

In an embodiment, the installation bracket comprises one or more, preferably two, mounting holes suitable for receiving a rivet, screw, or the like to secure the bracket to the supporting structure, e.g. to the roof. One or more, e.g. two, rivets can be pre-mounted to the bracket, so that the installer can drill holes in the roof, e.g. through a metal face of an insulated roof panel, and then place the bracket with the pre-mounted rivets, and use a rivet tool to secure the bracket.

In an embodiment, the installation bracket comprises a side member and a blocking member, wherein the side member comprises a hole through which the blocking member is configured to be secured, for example the blocking member comprises a bolt and nut. The blocking member further comprises a clamping member which is configured to engage with the two notch overhanging portions such that the blocking member is clamped between the notch overhanging portions of the centrally raised surface, wherein the blocking member is configured to clamp a solar panel frame portion by means of the clamping member and prevent a received portion of the solar panel frame from disengaging from the first hook and/or the second hook and/or prevent a solar panel from sliding sideways.

In an embodiment, the installation bracket comprises both a lip and a side member configured to receive a blocking member. The installation bracket comprising both the lip and side member allows for versatile use of the installation bracket. For example, for the installation bracket mounted on the side it is desired to rigidly clamp the solar panel frame portions and prevent the solar panel frames from sliding sideways out of the installation bracket.

In an embodiment, the installation bracket comprises one or more cable management holes through the base plate, e.g. through an extension of the base plate outward of the first and/or second hook, for allowing the passage of a cable, for example a cable for grounding of the system.

In an embodiment, the installation bracket comprises a slit in a sidewall of the base plate and a blocking clip. The blocking clip is inserted through the slit and configured to prevent a received portion of the solar panel frame from disengaging from the first hook and/or second hook and/or prevent a solar panel from sliding sideways out of the installation bracket.

In an embodiment, the blocking clip is U-shaped and comprises a base and two essentially parallel legs, each leg comprising a hole configured to receive a securing member. In a blocking position of the blocking clip, one of the legs is inserted through the slit of the installation bracket. The securing member is inserted through both holes of the blocking clip. The securing member for example comprises a nut, a bolt. In embodiments the holes of the blocking clip comprises internal threading configured for engaging with external threading of a securing member.

In an embodiment, the base plate further is extended beyond the first and or second hook to form one or more cable management formations. For example, outward of a hook the base plate is extended and comprises one or more raised cable management ribs, preferably two ribs, outward of the first and or second hook, wherein in between a rib and a hook and/or in between two ribs a cable receiving space is defined for management of one or more cables, preferably wherein the one or more raised ribs each comprise a flattened top end and the flattened top end is configured to allow a part of a solar panel frame to rest upon and guide towards the second hook during installation. This way, for example, the minus and plus cables can be individually grouped in different cable receiving spaces. The flattened top is configured to allow a part of a solar panel frame to rest upon said end during the installation process and allows the solar panel frames to be guiding towards the second hook during installation.

In an embodiment, the system further comprises a cable management clip, wherein the cable management clip is configured to receive or hold one or more electrical cables, e.g. wiring cables connecting the solar panels to the electrical grid and/or other electrical components, wherein the cable management clip is releasably secured to the installation bracket. The cable management clip allows for a tidy and efficient cable management. For example, the cable management clip is made of metal rod.

Preferably, the cable management clip is rotatably connected to the base plate around the transverse axis of the installation bracket, preferably the cable management clip comprises an end portion that, once rotated, is configured to limit the lateral movement of the clip thereby securing the cable management clip.

In an embodiment, the base plate comprises a through-hole, e.g. in a centre of the base plate, configured to receive a fastener, e.g. a screw. The through-hole in the base plate allows the solar panel installation bracket to be secured by use of a fastener to a support structure, preferably a roof structure, preferably a slanted roof structure. For example, the base plate has a single through-hole for a single fastener that secures the base plate to the support structure.

In an embodiment, the installation bracket is made of a metal, e.g. aluminium, e.g. from an aluminium extrusion profile. Preferably, the metal provides an electrical connection between adjacent solar panels in a solar panel array, e.g. between the metallic, e.g. aluminium, frames thereof.

In an embodiment, the installation bracket is made using a metal extrusion, which allows for the quick production of the bracket with the base plate and hooks which may have a fairly complex cross-sectional shape in vertical cross-section.

In an embodiment, the installation bracket comprises a at least mounting hole in the base plate. For example, a single central mounting hole for mounting the installation bracket to a roof or a solar panel installation frame.

In an embodiment, the installation bracket further comprises an outer end opposite of the first hook and an outer and opposite of the second hook, wherein each outer end comprises a mounting hole, for example a mounting hole suitable for receiving a rivet or a screw. The mounting holes allow the installation bracket to be mounted onto a roof or a solar panel installation frame. The mounting holes at two opposite ends allow for a more stable configured as compared to a single central mounting hole. During mounting of the installation bracket preferably rubber seals are used to form a tight and waterproof seal around the mounting area.

In an embodiment, the system is configured to be used to install solar panels which comprise a solar panel frame, which solar panel frame is used to secure attach the solar panel to the solar panel installation system. The solar panel frame comprises portions with an inward flange, these inward flanges being used to engage the first and second hooks of the installation brackets. Preferably, when installing solar panels on an inclined support structure, e.g. a slanted roof, the inward flange of a lower portion of the solar panel frame is used to engage the first hook of a lower installation bracket and the inward flange of an upper portion of the solar panel frame is used to engage the second hook of an upper installation bracket. Herein lower and upper refer to the relative location on the inclined support structure.

In an embodiment, the system, e.g. when installed on a roof, comprises multiple upper and lower solar panel brackets, wherein the spacing between the upper solar panel installation brackets and the lower solar panel installation brackets is between 1000 mm to 1500 mm, e.g.1300 mm.

The invention further relates to a roof, e.g. a slanted roof, preferably a lightly slanted roof, e.g. a roof with an inclination between 1 and 5 degrees, provided with solar panels attached to the roof by use of the solar panel installation system described herein. Preferably, the system comprises upper solar panel installation brackets and lower solar panel installation brackets when applied to a slanted roof. Herein the upper and lower solar panel installation brackets are spaced apart by a distance between 1000 mm to 1500 mm, e.g. 1300 mm.

The invention also relates to a method of installation of one or more solar panels onto a slanted roof, e.g. a lightly slanted roof, making use of the solar panel installation system described herein. The method comprises the following steps:
- attaching of two lower brackets and two upper brackets to the slanted roof, arranged to allow a solar panel frame to be secured by the four brackets, preferably the two lower brackets are attached at the same height of the roof and the two upper brackets being attached at a higher height compared to the two lower brackets, wherein preferably use is made of an installation frame which makes it easier to quickly and precisely install the installation brackets, the solar panel frame having an upper and a lower frame portion, wherein the brackets are each oriented such that the first hook thereof is positioned above the second hook thereof;
- optionally, resting the upper solar panel frame portion on the resting portion of the second hook of the upper brackets, when present;
- engaging the lower solar panel frame portion with the first hook of the lower brackets;
- pivoting, and upward sliding of the solar panel, such that the upper portion of the solar panel frame is able to engage the second hook of the upper brackets;
- sliding the solar panel frame downward until the upper solar panel frame portion rests on the inner surface of the second hook and the top surface of the base plate of the upper bracket, preferably the centrally raised surface of the base plate, preferably the solar panel frame portion rests on the ridges of the base plate, due to the longer overhang length of the first hook the upper frame portion will rest on a portion of the second hook before the lower frame portion disengages the lower hook.

Optionally, the method comprises placing blocking members on the installation brackets, such that the members block the engaged part of the solar panel frame from moving to a disengaged position, thereby limiting the movement of the solar panel frame, and thus securing the solar panel.

The invention furthermore provides a method for installing a column of solar panels on a slanted roof structure, wherein one or more additional rows of two installation brackets are installed, as to allow for the installation of two or more solar panels above each other. When installing two or more solar panels above each other, a single installation bracket can be used to engage two different solar panel frames, e.g. the inward flange of the lower portion of a first solar panel is engaged with the first hook of the installation bracket while the inward flange of the upper portion of a second solar panel is engaged with the second hook of the same installation bracket. The solar panels can be installed from top to bottom as well as from bottom to top.

The invention also provides a method for installing a column of solar panels, wherein one or more additional rows of two installation brackets are installed, as to allow for the installation of two or more solar panels above each other.

The invention also provides a method for installing an array of solar panels, e.g. a solar panel field, on a slanted roof, wherein the multiple columns are installed next to each other according to the method described herein, preferably the columns are connected to each other such that the columns are electrically connected.

The invention will now be described with reference to the figures. In the figures:
Fig. 1 shows a side view of an exemplary embodiment of the solar panel installation bracket according to the invention;
Fig. 2 shows a side view of a different embodiment of the solar panel installation bracket according to the invention;
Fig. 3a shows an embodiment of the blocking member;
Fig. 3b shows the blocking member being attached to the installation bracket;
Fig. 4 shows the cable management clip;
Fig. 5a-b show a side view of a solar panel installed on a slanted roof using the solar panel installation system;
Fig. 6 shows a 3D view solar panel installed using the solar panel installation system;
Fig. 7a-e show the step of the installation method of a solar panel using the solar panel installation system;
Fig. 8 shows an array of solar panels installed using the solar panel installation system.
Fig. 9 shows an alternative embodiment of the blocking member;
Fig. 10 shows the blocking member being attached to the installation bracket;
Fig. 11 shows an alternative embodiment of the installation bracket;
Fig. 12 shows an alternative embodiment of the blocking clip attached to the installation bracket in a perspective view;
Fig. 13 shows an alternative embodiment of the blocking clip attached to the installation bracket in a sideview;
Fig. 14 shows an alternative embodiment of the blocking clip;
Fig. 15a-15d show the use of the blocking clip during installation of a solar panel;
Fig. 16 shows an alternative embodiment of a blocking member;
Fig. 17 shows a perspective view of a variant of the installation bracket of Fig. 1 with the lip in a non-blocking configuration;
Fig. 18 shows a perspective view of a variant of the installation bracket of Fig. 1 with the lip in a blocking configuration;
Fig. 19 shows a side view of a variant of the installation bracket;
Fig. 20 shows a side view of a variant of the installation bracket with two solar panel frames installed;
Fig. 21 shows a perspective view of a variant of the installation bracket further comprising a blocking member;
Fig 22. shows a side view of the installation bracket of figure 21 with two solar panel frames installed;
Fig. 23 shows a perspective view of another variant of the installation bracket;
Fig. 24 shows a perspective view of another variant of the installation bracket;
Fig. 25 shows a perspective view of another variant of the installation bracket comprising a blocking clip;
Fig. 26 shows a side view of another variant of the installation bracket.

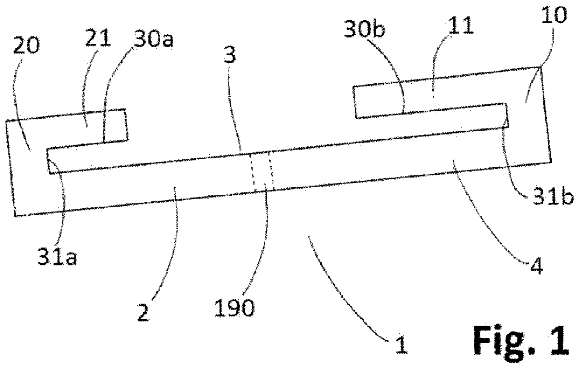

Figure 1 shows a side view of an embodiment of the solar panel installation bracket 1. The bracket comprises a base plate 2 which is configured to be attached to a roof structure 90, e.g. a slanted roof structure, having a top surface 3 and two longitudinal sides 4.

The bracket has a first hook 10 integrated with base plate 2 and extending from the base plate. The first hook has a first overhanging portion 11, having an overhang length, which overhangs a part of the top surface 3 of the base plate, configured to receive a solar panel frame portion of a first solar panel between the first overhanging portion and the top surface of the base plate.

The bracket has a second hook 20 integrated with the base plate 2 and extending from the base plate, the second hook comprising a second overhanging portion 21 having an overhang length, which overhangs a part of the top surface 3 of the base plate, configured to receive a solar panel frame portion of a second solar panel between the second overhanging portion and the top surface of the base plate.

The overhanging portions 11, 21 of the first hook 10 and second hook 20 are pointing toward each other. In the shown embodiment the first and second hooks are arranged at two opposing ends of the base plate. Each hook has an underside 30a,b of the overhanging portion and an inner surface 31a,b. The first overhanging portion 11 of the first hook has a larger overhang length than the second overhang length 21 of the overhanging portion of the second hook.

In an embodiment, the first overhanging portion 11 of the first hook 10 has an overhang length between 15 and 25 mm, e.g. a length of 19 millimetres.

In an embodiment, the second overhanging portion 21 of the second hook 20 has an overhang length between 5 and 10 mm, e.g. a length of 7 millimetres.

The base plate has a through-hole 190, e.g. in a centre of the base plate, configured to receive a fastener, e.g. a screw. The through-hole in the base plate allows the solar panel installation bracket to be secured by use of a fastener, to a support structure, preferably a roof structure, preferably a slanted roof structure.

The installation bracket is made of a metal, e.g. aluminium. As preferred the metal installation bracket also provided an electrical connection between adjacent solar panel in a solar panel array. Preferably, the installation bracket is made using metal extrusion, which allows for the quick production of the complex cross-sectional shapes.

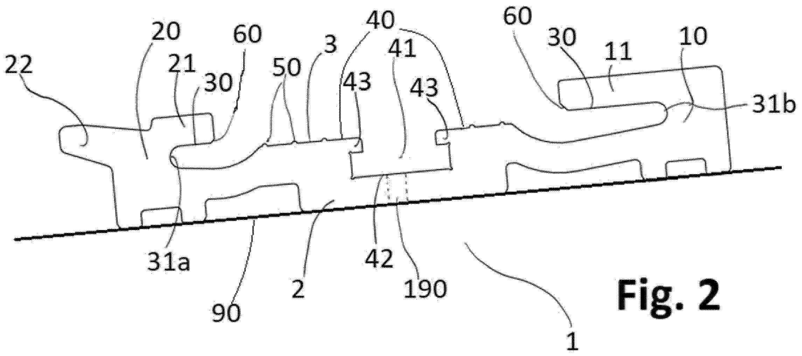

Figure 2 shows a side view of a preferred embodiment of the installation bracket.

The top surface 2 of the base plate 3 comprises a centrally raised surface 40 which allows for a pivotal movement during insertion of a solar panel frame portion in a first hook 10 or second hook 20 of the bracket. The centrally raised surface of the base plate and an underside of the overhanging portion of a hook 30a,b are configured to support the solar panel frame portion, e.g. a solar panel frame portion rests between the underside of the overhanging portion and the centrally raised surface of the base plate.

The centrally raised surface of the top surface 40 here comprises a notch 41, the notch having a notch surface 42. The notch extends between the two longitudinal sides of the base plate. The base plate further comprises two notch overhanging portions 43 which overhang the notch surface 42.

As preferred the top surface comprises multiple ridges 50, preferably the ridges being of the same height. The ridges extend between the two longitudinal sides of the base plate, preferably the solar panel frame rests upon said ridges. Preferably, the raised ridges are arranged on the centrally raised surfaces 40.

The outer edge of the overhanging portions 11, 21 of the first hook 10 and second 20 have bevelled edges 60. The bevelled edges are configured to help guide a solar panel frame portion during engaging of a hook by a solar panel frame portion. The bevelled edge acts as guide by directing and aligning the solar panel frame portion into the first and second hook, increasing the ease and efficiency of the installation process.

The second hook 20 comprises a resting portion 22 which extends in the opposite direction of the second overhanging portion 21 of the second hook. The resting portion is configured to allow a part of a solar panel frame to rest upon said resting potion, e.g. the resting portion of the second hook allows an installer to briefly and securely rest the solar panel frame during the installation process.

In the shown embodiment the base plate has a width and the first and second hook have a width equal to the width of the base plate.

As preferred the installation bracket is made as an aluminum extrusion profile from which a section is cut off to form the bracket.

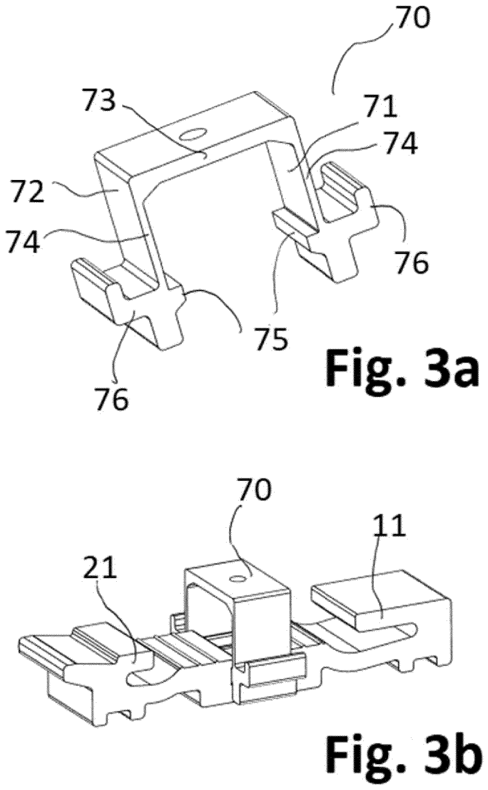

Figures 3a shows a blocking member 70 which is configured to be placed between the overhanging portions 11, 21 of the first hook 10 and the second hook 20 such that the blocking member abuts the base plate 2. Preferably, the blocking member is substantially rigid yet allowing for small elastic deformations, e.g. caused by an installer, in order to securely attach the blocking member as a clip to the base plate. The blocking member is configured to prevent a received portion of the first solar panel frame from disengaging from the first hook and a received portion of the second solar panel frame from disengaging from the second hook. Preferably, the blocking member is placed between the overhanging portions of the first hook and the second hook after at least one of the hooks of the bracket is engaged by a solar panel frame.

The blocking member 70 is embodied here as a blocking clip, said blocking clip being substantially U-shaped having an inner 71 and an outer surface 72, wherein the blocking clip comprises a base portion 73 and two parallel extending portions 74, wherein each extending portion has an inner protrusion 75 extending from the inner surface and an outer protrusion 76 extending from the outer surface of the extending portions. The outer protrusions can be used to more easily handle the blocking clip, e.g. attach and detach the blocking clip from the bracket.

Figure 3b shows the blocking member placed between the two overhanging portions of the first and the second hook, whereby the inner protrusions 75 are clamped in between the two notch overhanging portions 43 of the centrally raised surface and the notch surface 42 thereby securing the blocking clip of the bracket.

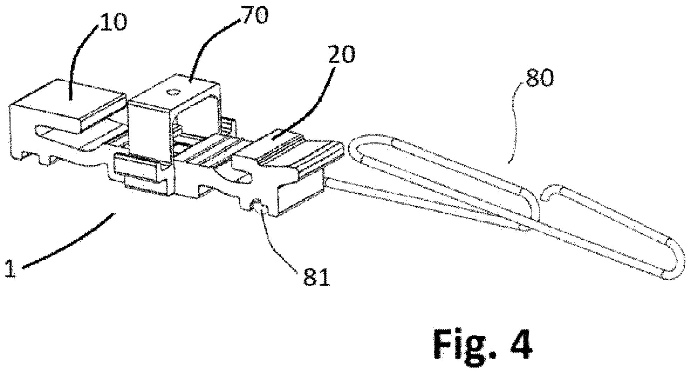

Figure 4 shows the cable management clip 80 which is configured to receive electrical cables, e.g. wiring cables connecting the solar panels to the electrical grid and/or other components, wherein the cable management clip is releasably secured to the installation bracket. Preferably, the cable management clip is rotatably connected to the base plate about the transverse axis of the installation bracket. The cable management clip allows for a tidy and efficient cable management. Preferably, the cable management clip is rotatably connected to the base plate around the transverse axis of the installation bracket, preferably the cable management clip comprises an end portion 81 that, once rotated, limits the transverse movement of the clip thereby securing the cable management clip.

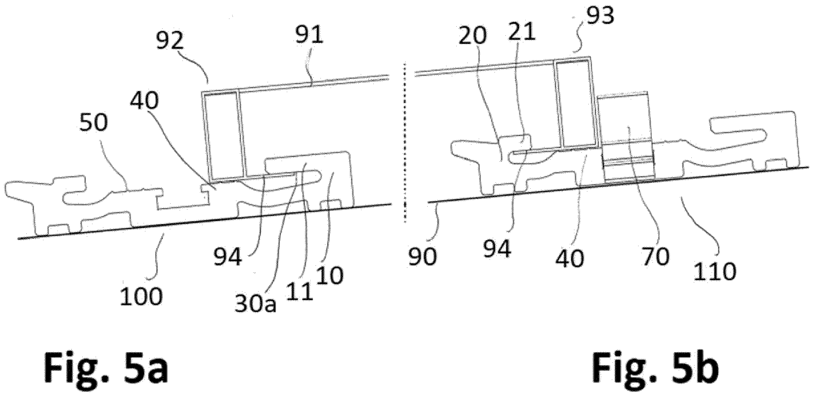

Figures 5a and 5b shows a side view of a solar panel installed on a slanted roof 90 using the described solar panel installation system. Here the system is configured to install solar panels comprising a solar panel frame 91. The solar panel frame comprises a lower portion 92 and an upper portion 93, wherein the lower and the upper frame portion each comprises an inward flange 94.

In figure 5a the first hook 10 of a lower installation bracket 100 is configured to engage the inward flange 94 of the lower portion 92 of the solar panel frame. The centrally raised surface 40 of the base plate and the underside 30a,b of the overhanging portion 11 of the first hook are configured to support the lower portion of the solar panel frame, e.g. a solar panel frame portion is held between the underside of the overhanging portion and the centrally raised surface of the base plate.

In figure 5b embodiment the second hook 20 of an upper installation bracket 110 is configured to engage the inward flange 94 of the upper portion 93 of the solar panel frame. The centrally raised surface 40 of the base plate and the underside 30a,b of the overhanging portion 21 of the first hook are configured to support the lower portion of the solar panel frame.

In the shown embodiment a blocking clip 70 is placed in between the overhanging portions 11, 21 of the first and second hook 10, 20 of the upper installation bracket 110. The blocking clip is configured to prevent the inward flange 94 of upper portion 93 of the solar panel frame 91 from disengaging from the first hook 21. The blocking member can also be placed on the lower installation bracket 100 or the blocking clip can be placed on both the installation brackets at the same time.

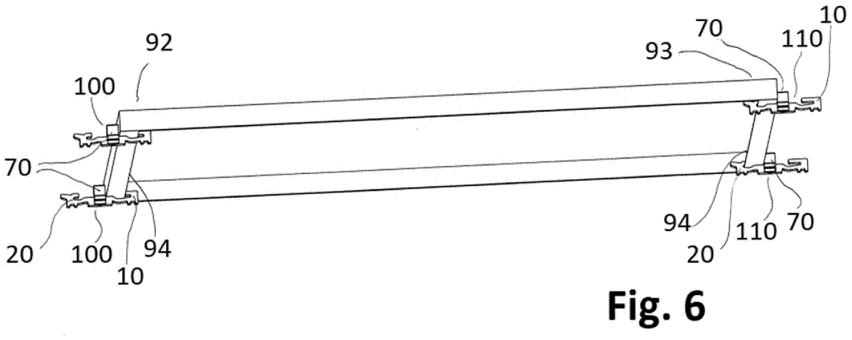

Figure 6 shows a solar panel installed using the solar panel installation system. The inward flange 94 of the lower portion 92 of the solar panel frame is engaged by the first hook 10 of the two lower installation brackets 100 which are installed on the same height. The inward flange 94 of the upper portion 93 of the solar panel frame is engaged by the second hook 20 of the two upper installation brackets 110 which are installed on the same height. A blocking member 70, here clip, is placed on each of the installation brackets. The clips 70 are configured to limit the movement of the solar panel, thereby securely installing the solar panel.

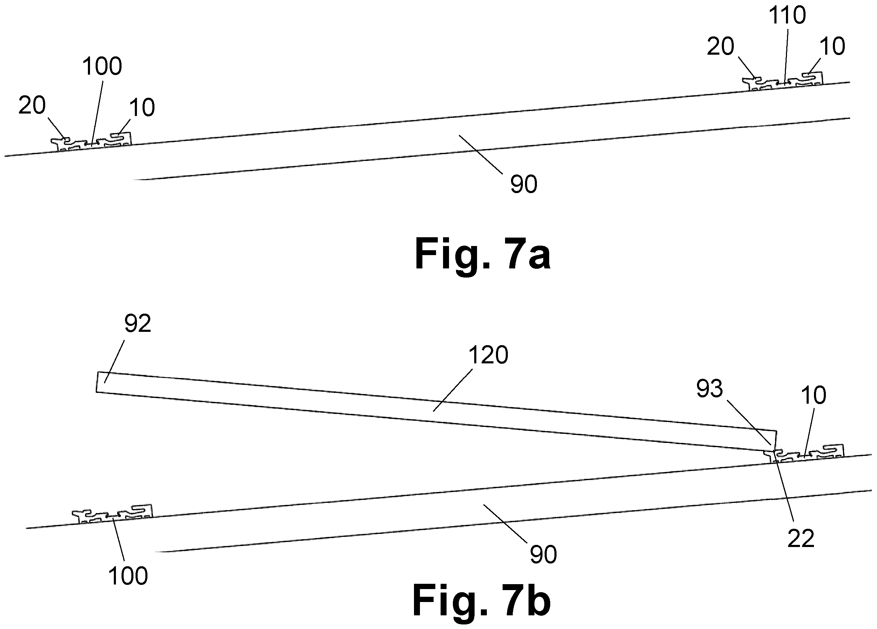

Figure 7a shows a side view of the first step of the installation method for installing a solar panel using the solar panel installation system on a slanted roof 90. Two lower brackets 100 and two upper brackets 110 are attached to the slanted roof arranged such as to allow a solar panel frame to be secured by the four brackets. The brackets are oriented such that the first hook 10 is positioned above the second hook 20, so higher up on the roof.

In an embodiment, as shown in fig. 7a the rows of upper installation brackets and of lower installation brackets 100,110 are spaced apart by a distance of between 1000 to 1500 mm, e.g. 1300 mm. This corresponds to the dimensions of most commercially available solar panels.

Figure 7b shows the solar panel 120, which has an upper frame portion 93 and a lower frame portion 92, the upper solar panel frame portion rests on the resting flange 22 of the second hook of the upper brackets 110.

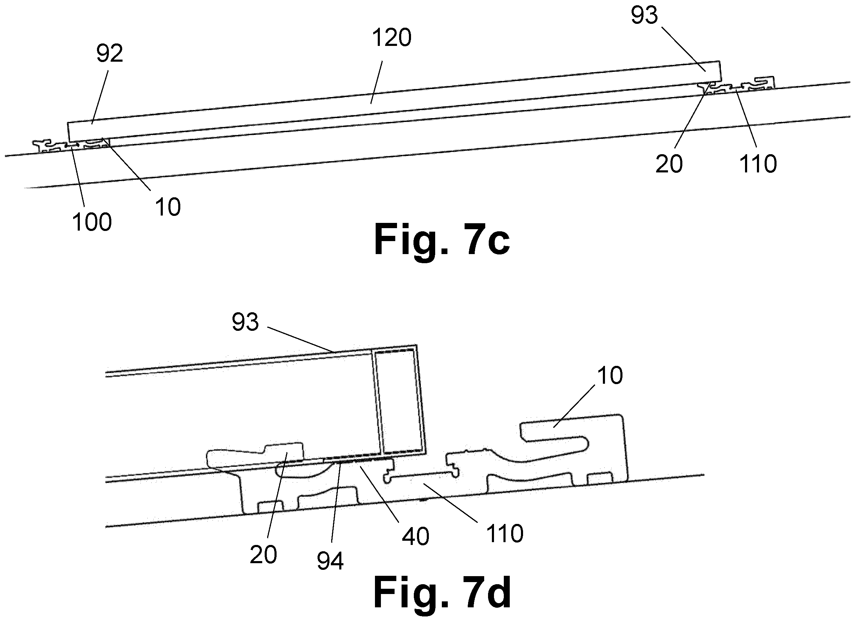

Figure 7c shows the lower solar panel frame portion engaged with the first hook of the lower brackets 100. The upper portion of the rests on the overhanging portion of the second hook 20 of the upper brackets 110 and is not yet engaged with the second hook of the upper brackets. The solar panel 120 is then pivoted and slid upwards such that the upper 93 is able to engage the second hook 20 of the upper brackets 110.

Figure 7d shows the upper portion 93 of the solar panel frame resting on the centrally raised surface of the base plate 40. The solar panel frame is then slid downward until the upper solar panel frame portion rests on the inner surface of the second hook and the top surface of the base plate of the upper bracket 110, due to the longer overhang length of the first hook the upper frame portion will rest on a portion of the second hook before the lower frame portion disengages the lower hook.

Figure 7e shows the solar panel installed using the solar panel installation system, the upper and lower portion of the solar panel frame are engaged by the upper and lower brackets respectively. Blocking members 70 are placed installation brackets, such that it blocks the engaged part of the solar panel frame from moving to a disengaged position, thereby limiting the movement of the solar panel frame, and thus securing the solar panel. Wire management clip 80 are attached to the installation brackets.

A column of solar panels is installed by attaching one or more additional rows of installation brackets on a support structure, e.g. a slanted roof. This allows for the installation of two or more solar panels above each other. An array of solar panels can be installed by installing multiple columns of solar panels next to each other, preferably the columns are connected to each other such that the columns are electrically connected. Preferably, the transverse movement of the solar panels of an array is limited by using locking clips at the transverse side of the solar panel array.

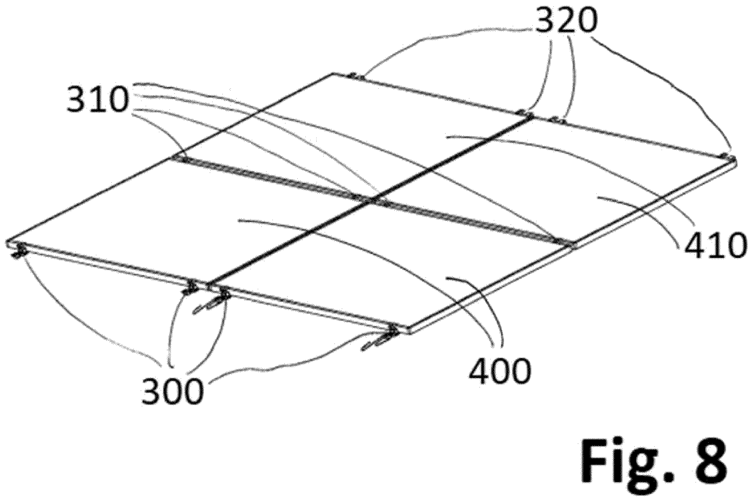

Figure 8 shows an array of solar panels installed using the solar panel installation system. Two columns of two solar panels are installed next to each other. The lower portion of the solar panel frame of the lower solar panels 400 are engaged by the first hook of the lower brackets 300 and the upper portion of the solar panel frame of the lower solar panels are engaged by the second hook of the middle brackets 310. The lower portion of the solar panel frame of the upper solar panels 410 are engaged by the first hook of the lower middle brackets 310 and the upper portion of the solar panel frame of the upper solar panels are engaged by the second hook of the upper brackets 320.

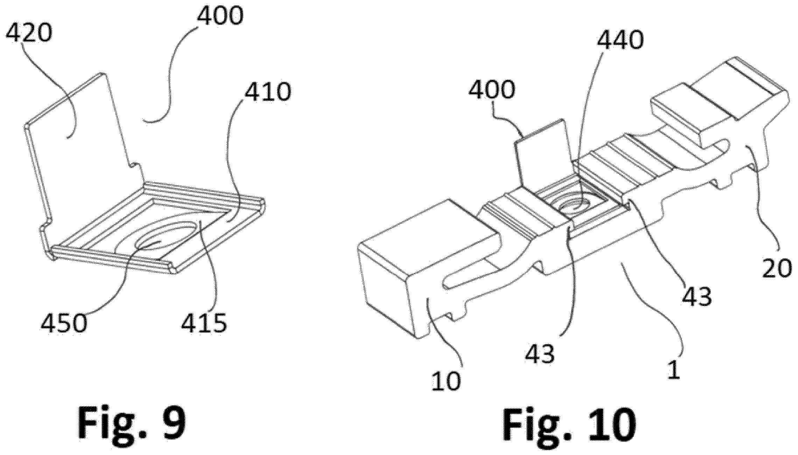

Figure 9 shows an alternative embodiment of the blocking member where said blocking member is a blocking clip 400. The blocking clip is substantially L-shaped. The blocking clip comprises a base portion 410 and an extending portion 420, wherein the notch surface of the bracket comprises a recess 440, wherein the base portion has an angled portion 415 which can engage with a corresponding recess 440 of the notch surface 42. When the blocking clip is slidably engaged with the bracket, the angled portion of the blocking clip falls into the recess of the notch surface 42.

In an embodiment the angled portion of the base portion of the blocking clip comprises a through-hole 450, e.g. in the center of the angled portion, configured to receive a fastener, e.g. a screw.

Figure 10 shows the blocking member 400 being attached to the installation bracket 1. The angled portion 415 is engaged in the recess 440 defined by the notch surface 42. The base portion 410 of said blocking clip is clamped between the notch overhanging portions 43, which overhang the notch surface 42.

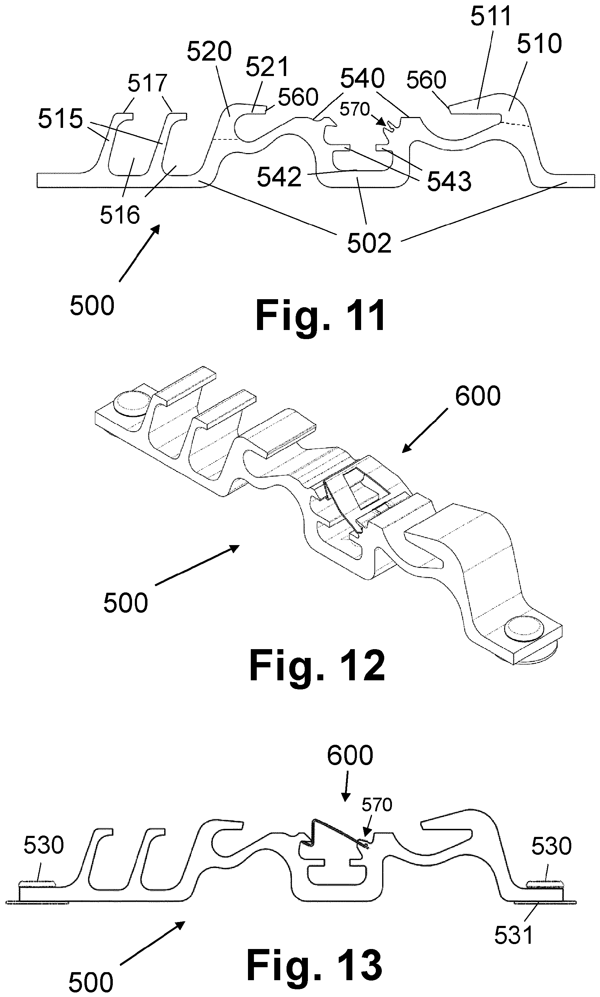

Figure 11 shows a sideview of an embodiment of the installation bracket 500. The bracket comprises a base plate 502 having a top surface 503. The bracket has a first hook 510 and a second hook 520. The first hook has a first overhanging portion 511 which overhangs the top surface 503 of the base plate 502, and the second hook has a second overhanging portion 521 which overhangs the top surface 503 of the base plate 502. The dashed line shows the boundary between the base plate and the overhanging portions.

In an embodiment, the first overhanging portion 511 of the first hook 510 has an overhang length between 15 and 25 mm, e.g. a length of 19 millimetres.

In an embodiment, the second overhanging portion 521 of the second hook 520 has an overhang length between 5 and 10 mm, e.g. a length of 7 millimetres.

In the shown embodiment the base plate 3 comprises a centrally raised surface 540 which allows for a pivotal movement during insertion of a solar panel frame portion in a first hook 510 or second hook 520 of the bracket. The shown base plate further comprises two notch overhanging portions 543 which overhang the notch surface 542, and comprises bevelled edges 560.

The shown installation bracket 500 further comprises two raised cable management ribs 515. These ribs define a cable receiving space 516, which is configured for receiving cable for installation and during use of the solar panel.

The bracket 500 of the shown embodiment comprises ribs 515 having a flattened top end 517. This flattened top end helps guiding the frame of the solar panel towards the second hook 520 during installation.

Figures 12 and 13 show the embodiment of the installation bracket 500 of figure 11 having a blocking clip 600. In the shown embodiment the installation bracket 500 comprises two mounting holes opposite ends of the bracket. The mounting holes are used to secure the installation bracket to a rooftop or a solar panel installation frame by means of a screw or rivet. In the figure a top portion of a rivet 530 is shown. At the underside of the bracket a rubber seal 531 is visible. These seals are used to form a tight and waterproof seal around the mounting area.

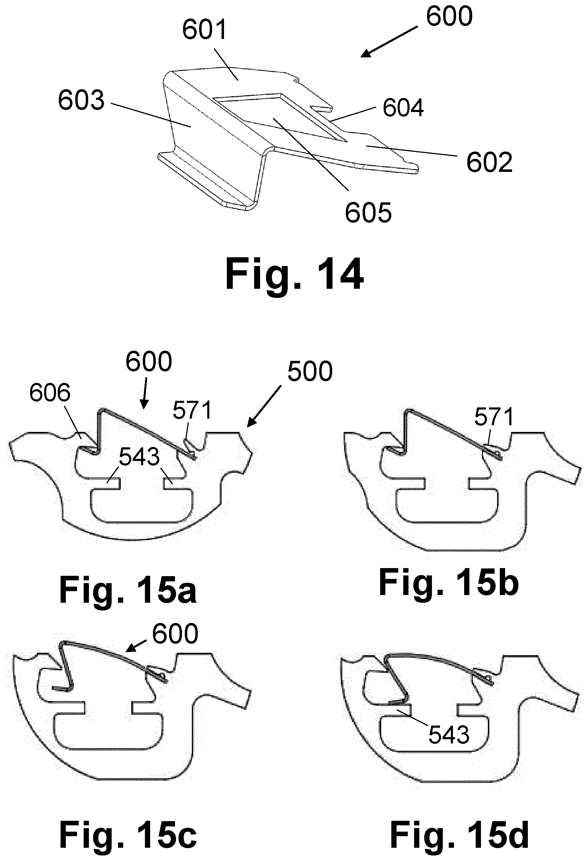

Figure 14 shows a perspective view of the blocking clip 600. The blocking clip 600 comprises a middle portion 601, a first end 602 and a second end 603. The blocking clip is configured to engage with a receiving portion 570 of the base plate. The blocking clip of the shown embodiment comprises a recess 604 which is used for engaging with the receiving portion 570 of the installation bracket 500. Another recess 605 is present in the centre of the middle portion 601, which is for example to save weight or to engage with when removing the clip from the installation bracket.

Figures 15a-15d show the installation process of the blocking clip 600. For simplicity only a portion of the installation bracket 600 is shown. The top surface 503 of the base plate 502 comprises a lip 506 and notch overhanging portions 543.

Figure 15a shows the blocking clip 600 prior to installing the clip on the installation bracket 500. Here a securing portion 571 of the receiving portion 570 the installation bracket 500 is in an unsecured position. The lip 506 prevents the second end 603 of the blocking clip 600 from moving upward and prevents it from becoming unsecured.

In figure 15b the securing portion 571 is moved into an engaged position with the recess 604 of the blocking clip 600. The blocking clip is now in the main position. The main position is achieved both prior to installation of the solar panel frame, or after installation of the solar panel frame wherein the frame portion is prevented from disengaging from a hook of the installation bracket.

Figure 15c shows the blocking clip 600 elastically deforming downward partially towards the lowered position.

Figure 15d shows the blocking clip 600 in the elastically deformed lowered position. Here the notch overhanging portion 543 prevents the clip 600 from moving too far downward. In this lowered position the solar panel frame portion is enabled to engage with the second hook. Once the solar panel frame portion is moved in place, the blocking clip can be moved back into the position as shown in fig. 15b and prevent the solar panel frame portion from disengaging the second hook.

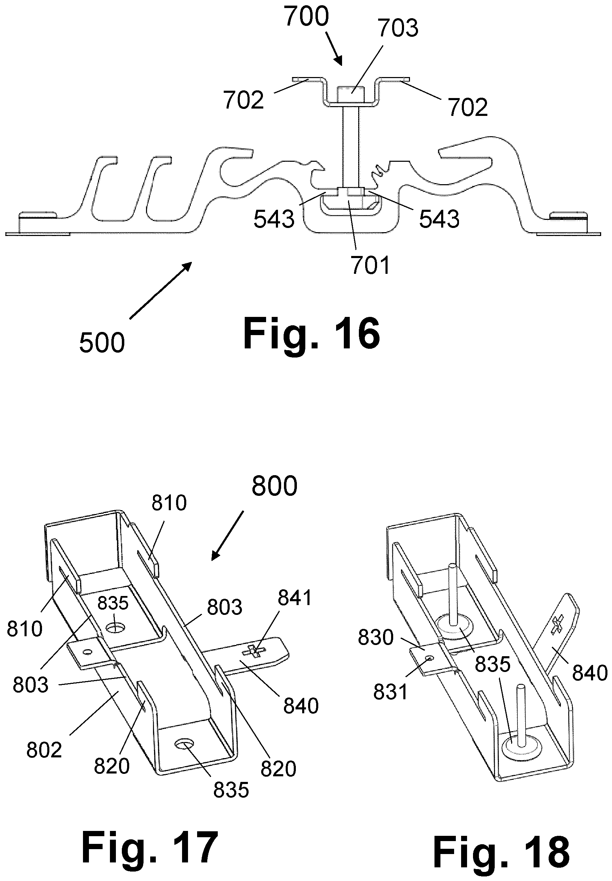

Figure 16 shows the installing bracket 500 comprising another embodiment of a blocking member 700. The blocking member comprises a nut 701, a bolt 702 and a clamping member 703. The bolt 702 engages with the two notch overhanging portions 543 of the installation bracket 500. The blocking member comprises the clamping member 703 for clamping a solar panel frame portion.

Figures 17 and 18 show a perspective view of a variant of the bracket of figure 1.

The solar panel installation bracket 800 is generally U-shaped with a bottom and two side walls which make up the base plate 802 as well as the hooks 810, 820.

The base plate is configured to be attached to a roof structure.

The base plate has a top surface 803 delimited by the top edges of the side walls.

The bracket has a first hook 810 integrated with the base plate 802 and extending from the base plate. The hook 810 is formed by the ensemble of the first hook portions, each in one of the side walls. The same applies for the second hook 820.

The first hook has a first overhanging portion 811, having an overhang length which overhangs a part of the top surface 803 of the base plate. The overhanging portion is configured to receive a solar panel frame between the first overhanging portion and the top surface of the base plate.

The bracket 800 has a second hook 820 integrated with the base plate 802 and extending from the base plate. The second hook has a second overhanging portion 821, having an overhang length which overhangs a part of the top surface 803 of the base plate. The overhanging portion is configured to receive a solar panel frame between the second overhanging portion and the top surface of the base plate.

The bracket 800 further comprises a side member or portion 830 which is configured for receiving a blocking member, e.g. the side member/portion being folded outward from the sheet metal bracket. For example, the side member is provided with a threaded hole for a bolt, which serves to clamp a clamping member 702 onto the solar panel(s).

The bracket 800 further comprises two mounting holes 835, which are configured to secure the installation bracket to a roof or a solar panel installation frame, e.g. by means of a screw or a rivet. In figure 18 two rivets 836 are shown inside the mounting holes 835.

The shown installation bracket further comprises a bendable lip 840, here integral with the sheet metal bracket. The lip 840, by way of example, further comprises an opening 841 which can be engaged with a tool. For example, to bend the lip between the non-blocking configuration and the blocking configuration or vice versa.

The lip 840 as shown in figure 17 is in the non-blocking configuration. This way the lip does not obstruct the insertion or removing of a solar panel frame portion from a first hook and/or second hook.

In figure 18 the lip is bent into a blocking configuration, which is done after placing of the solar panel(s). This way the lip prevents that a portion of a solar panel frame inserted in the slit defined by the first and/or second hook can be removed.

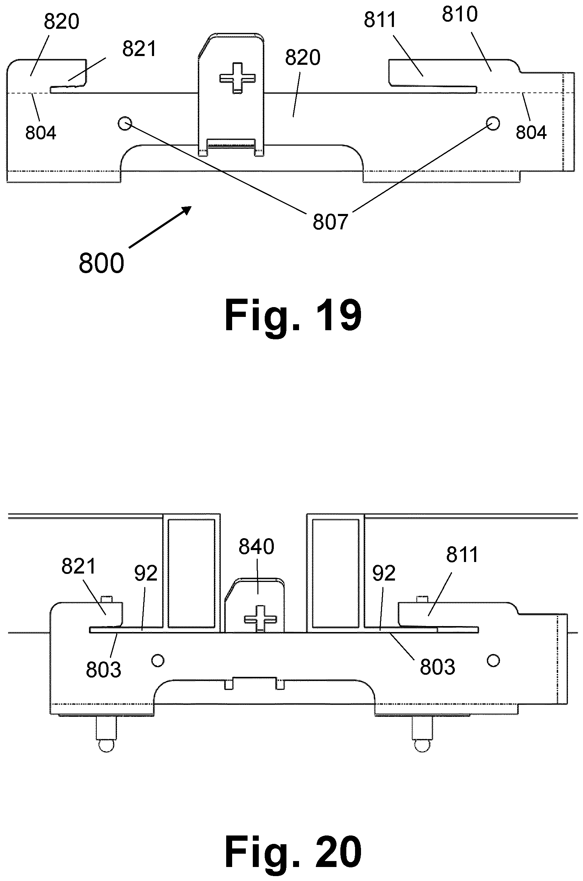

Figure 19 shows a side view of a variant of the installation bracket 800. Here the overhanging portions of the first hook and the second hook are shown.

Here two cable holes 807 are visible which allow the passage of a cable, for example a cable for grounding of the system through a sidewall of the base plate. The holes can also be used to hold a connector for a grounding cable, so that the grounding cable(s) are connected to the metal bracket.

In this sideview a dashed line 804 shows what area forms the overhanging portion and what portion is the base plate.

In figure 20 a side view of the installation bracket 800 is shown where two solar panel frames are installed. The flange portions 92 of the two respective solar panel frames are held directly between the underside of the overhanging portion 811, 821 and the top surface 803 of the base plate 802. The top surface is formed by the upper edges of the side walls of the U-shaped bracket. The flange 92 held under portion 821 rests against the inner surface associated with said hook.

The lip 840 is in the blocking configuration. In the shown configuration it is impossible to remove either of the solar panel frames from underneath the overhanging portion without bending the lip into the non-blocking position.

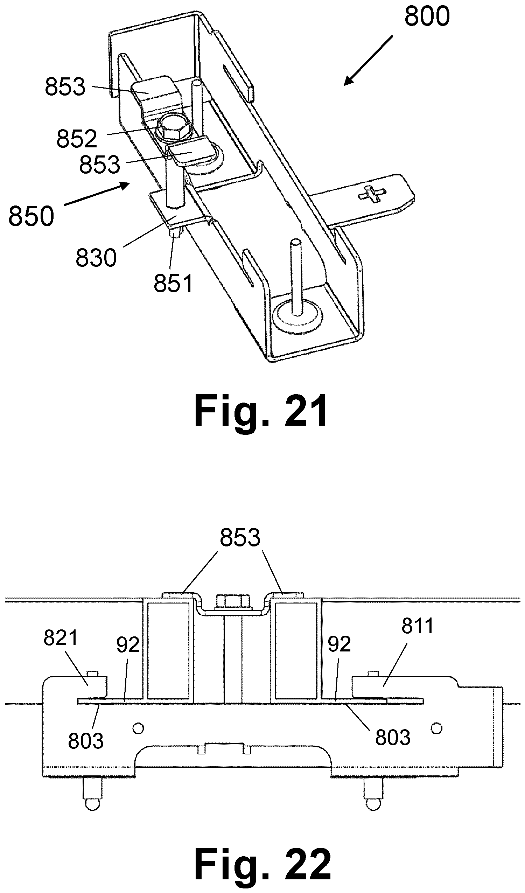

Figure 21 shows the installation bracket further comprising a blocking member 850 in cooperation with the side member 830. The blocking member 850 of the shown variant comprises a nut 851, a bolt 852, and a clamping member 853. The clamping member is configured to clamp a solar panel frame portion and prevent a received portion of the solar panel frame from disengaging from the first hook and/or second hook and/or prevent a solar panel from sliding sideways out of the installation bracket.

Figure 22 shows a sideview of the bracket of figure 21. Here two solar panel frames are installed by the bracket. The lower portion 92 of the two respective solar panel frames are held between the underside of the overhanging portion 821 and the top surface 803 of the base plate 802. The blocking member 850 clamps the solar panel frames by means of the clamping portion 853 and thereby prevents the removal of the solar panel frames from the overhanging portions.

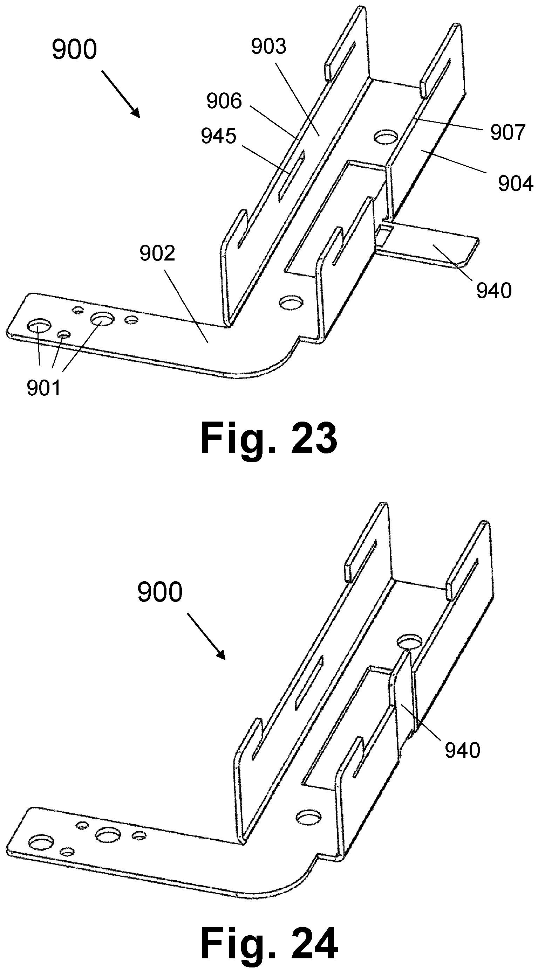

Fig. 23 shows another variant of the installation bracket 900. The installation bracket is generally U-shaped with a bottom 902 and side walls 903 and 904 having a respective top surface 906, 907. The side wall 903 comprises a slit 945. The slit 945 is configured for receiving a blocking member. The bottom 902 extends beyond the second hook and comprises one or more cable management holes 901, e.g. allowing to connect cable management clips (e.g. of plastic).

The bracket 900 further comprises a bendable lip 940. The lip is in the non-blocking configuration. Figure 24 shows the same variant of the installation bracket 900 wherein the lip is bent into the blocking configuration. In this configuration the lip prevents a received portion of the solar panel frame from disengaging from the first hook and/or the second hook.

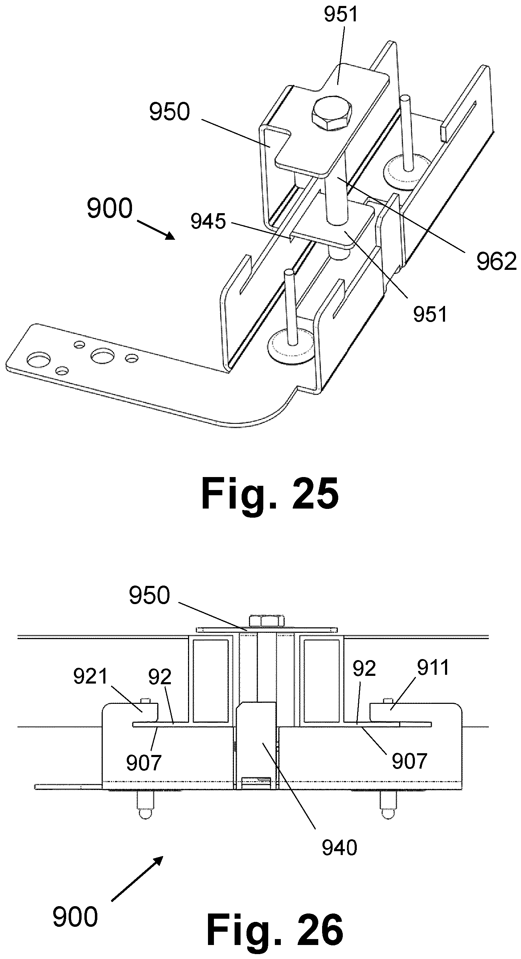

Figure 25 shows a variant of the installation bracket 900 further comprises a blocking member 950. The blocking member 950 is C-shaped and comprises a vertical web and two horizontal I legs 951. One of the legs is inserted through of the slit 945 in the side wall 903 of the base plate. The legs each comprising a hole, through which a bolt 962 of the securing member is inserted. The bolt may be secured by means of threading of a hole or by means of a nut.

Fig. 26 shows a side view of the installation bracket 900. Two portions 92 of respective solar panel frames are held in place by means of the installation bracket. The solar panel frames are held directly between the top surfaces 906, 907 and the overhanging portions 911, 921. The solar panel frames are prevented from disengaging by means of the bendable lip 940 in the blocking position and, optionally, by means of (additionally) the blocking member 950.

## Claims

1. Method for the installation of a solar panel on a support structure, e.g. a roof (90), the solar panel comprising a solar panel frame (91) having a first frame portion (93) and an opposed second frame portion (92) which frame portions each comprise an inward flange (94), wherein the method comprises:
- attaching of a first pair of a solar panel installation brackets (100) and a second pair of solar panel installation brackets (110) to the support structure in an arrangement allowing a solar panel frame to be secured by the four brackets,
wherein each solar panel installation bracket comprises:
- a base plate (2,502) configured to be attached to the support structure, the base plate having a top surface (3) and two longitudinal sides (4);
- a first hook (10) integrated with the base plate and extending from the base plate, the first hook comprising a first overhanging portion (11) having an overhang length, which overhangs a part of the top surface of the base plate,
- a second hook (20) integrated with the base plate and extending from the base plate, the second hook comprising a second overhanging portion (21) having an overhang length, which overhangs a part of the top surface of the base plate,
wherein the overhanging portions of the first hook and second hook are pointing toward each other, each hook having an underside of the overhanging portion (30a,b) and an inner surface (31a,b),
wherein the method further comprises:
- engaging the first solar panel frame portion with the second hook of the first pair of brackets,
- sliding the solar panel in a direction towards the second pair of brackets so that the second frame portion is able to engage the first hook of the second pair of brackets,
- sliding the solar panel in a direction towards the first pair of brackets so that the second solar panel frame portion is engaged with the first hook of the second pair of brackets,
**characterized in that:**
- each solar panel installation bracket is a rigid solar panel installation bracket and each hook is configured to engage with the underside of the overhanging portion thereof directly on the respective inward flange (94) of the solar panel frame whilst the solar panel frame rests on a portion of the top surface of the rigid bracket,
and **in that** the first overhanging portion (11) of the first hook (10) has a larger overhang length than the second overhang length of the second overhanging portion (21) of the second hook (20), so that - upon said sliding of the solar panel in the direction towards the first pair of brackets until the first frame portion comes to rest against the inner surface of the second hook - the second frame portion remains engaged by the first hooks of the first pair of brackets,
and wherein the method further comprises the use of blocking members, each associated with a respective solar panel installation bracket, so as to block the engaged parts of the inward flanges from moving to a disengaged position.

2. Method according to claim 1, wherein the first overhanging portion (11) of the first hook (10) has an overhang length between 15 and 25 mm, e.g. a length of 19 millimeters, and wherein the second overhanging portion (21) of the second hook (20) has an overhang length between 5 and 10 mm, e.g. a length of 7 millimeters.

3. Method according to claim 1 or 2, wherein a vertical distance between the underside of an overhanging portion of the first hook and of the second hook and the top surface of the base plate is between 1 mm and 3 mm, for example 1.5 mm.

4. Method according to any one or more of claims 1-3, wherein the blocking members comprises blocking clips which are separate from the brackets and are placed on the respective bracket between the overhanging portions (11, 21) of the first hook (10) and the second hook (20) after the inward flanges of the solar panel frame are engaged with the hooks.

5. Method according to any one or more of claims 1-3, wherein the blocking member is a blocking clip (600) made of an elastically deformable material, for example spring steel, said blocking clip being mounted to the bracket to protrude above the top surface in an unloaded main position of the blocking clip wherein the blocking clip prevents an inward flange of the solar panel frame from moving to a disengaged position, which blocking clip is elastically deformable into a lowered position when the solar panel frame rests thereon prior to engaging an inward flange with the respective hook.

6. Method according to any one or more of claims 1-3, wherein the blocking member is a bendable lip of the bracket, which is bend from a non-blocking configuration into a blocking configuration wherein the bendable lip prevents an inward flange of the solar panel frame from moving to a disengaged position.

7. Method according to any one or more of claims 1-6, wherein the blocking member comprises a clamping member and an associated bolt, which clamping member is configured to engage onto a top of the solar panel frame and wherein tightening the bolt causes the solar panel frame to be clamped against the bracket.

8. Solar panel installation system comprising a rigid solar panel installation bracket (1,500), e.g. for use in the method according to any one or more of claims 1-7, e.g. the system comprising one or more solar panels, wherein the solar panel installation bracket comprises:
- a base plate (2,502) configured to be attached to a support structure, e.g. a roof, the base plate having a top surface (3) and two longitudinal sides (4);
- a first hook (10) integrated with the base plate and extending from the base plate, the first hook comprising a first overhanging portion (11) having an overhang length, which overhangs a part of the top surface of the base plate, configured to receive a solar panel frame portion of a first solar panel between the first overhanging portion (11) and the top surface of the base plate;
- a second hook (20) integrated with the base plate and extending from the base plate, the second hook comprising a second overhanging portion (21) having an overhang length, which overhangs a part of the top surface of the base plate, configured to receive a solar panel frame portion of a second solar panel between the second overhanging portion (21) and the top surface of the base plate;
wherein the overhanging portions of the first hook and second hook are pointing toward each other, each hook having an underside of the overhanging portion (30a,b) and an inner surface (31a,b),
**characterized in that** the first overhanging portion (11) of the first hook (10) has a larger overhang length than the second overhang length of the second overhanging portion (21) of the second hook (20).

9. The system according to claim 8, wherein the first overhanging portion (11) of the first hook (10) has an overhang length between 15 and 25 mm, e.g. a length of 19 millimeters, and wherein the second overhanging portion (21) of the second hook (20) has an overhang length between 5 and 10 mm, e.g. a length of 7 millimeters, and/or wherein a vertical distance between the underside of an overhanging portion of the first hook and/or second hook and the top surface of the base plate is between 1 mm and 3 mm, for example 1.5 mm, and/or wherein an outer edge of the overhanging portion of the first hook and of the second hook comprises a bevelled edge (60), which bevelled edge is configured to help guide a solar panel frame portion during engaging of a hook by a solar panel frame portion.

10. The system according to claim 8 or 9, wherein the top surface of the base plate comprises a centrally raised surface (40) configured to allow a pivotal movement during insertion of a solar panel frame portion in the first hook (10) or second hook (20) of the bracket, wherein the centrally raised surface of the base plate and the underside (30a,b) of the overhanging portion of a hook are configured to support, e.g. clamp, the solar panel frame portion.

11. The system according to any of the preceding claims 8 - 10, wherein the system further comprises a blocking member, which blocking member is part of, or engaged with, or configured to be engaged with, the base plate and is provided or to be placed between the overhanging portions (11, 21) of the first hook (10) and the second hook (20) and is configured to prevent a received portion of the solar panel frame from disengaging from the first hook and/or the second hook.

12. The system according to claim 11, wherein the blocking member is a blocking clip (600) made of an elastically deformable material, for example spring steel, said blocking clip comprising a middle portion (601), a first end (602), and a second end (603), wherein one of the ends of the blocking clip engages with a receiving portion (570) of the base plate, wherein the blocking clip comprises a main position configured to prevent a received portion of the solar panel frame from disengaging from the first hook and/or the second hook, and wherein the blocking clip comprises an elastically deformed lowered position configured to enable a portion of the solar panel frame to engage with the first and/or the second hook, e.g. wherein the blocking clip comprises a recess (604) at its first end, which recess is clamped by the receiving portion (570) of the base plate (502), preferably wherein the second end of the blocking clip is configured to slide downwards when the middle portion of the blocking clip is pressed and the blocking clip deforms into the lowered position.

13. The system according to at least claims 10 and 11, wherein the centrally raised surface of the top surface comprises a notch having a notch surface (542), wherein said notch extends between the two longitudinal sides of the base plate (502), and wherein the base plate further comprises two notch overhanging portions (543) which overhang the notch surface, e.g. wherein the blocking member is a blocking clip (70) and is configured to be clamped between the notch overhanging portions (43) of the centrally raised surface and the notch surface, said blocking clip being substantially U-shaped, wherein the blocking clip comprises a base portion (73) and two parallel extending portions (74), wherein, for example, each extending portion has an inner protrusion (75) extending from an inner surface and/or an outer protrusion (76) extending from an outer surface of the extending portions of the clip,
or wherein the blocking member is a blocking clip (400) configured to be clamped between the notch overhanging portions of the centrally raised surface and the notch surface, said blocking clip being substantially L-shaped, wherein the blocking clip comprises a base portion (410) and a single extending portion (420), wherein the notch surface (42) comprises a recess (440), wherein the base portion has an angled portion (415) which can engage with the corresponding recess (440) of the notch surface (42), such that when slidably engaged the angled portion of the blocking clip falls into the recess of the notch surface (42), preferably wherein the angled portion of the base portion of the blocking clip (400) comprises a through-hole (450), e.g. in the center of the angled portion, configured to receive a fastener, e.g. a screw.

14. The system according to claim 11, wherein the blocking member is embodied as a bendable lip, e.g. the base plate being made of sheet metal, wherein the lip has a non-blocking configuration and a blocking configuration, e.g. when folded in an upright position, wherein in the blocking configuration the lip extends in between the overhanging portions of the first and the second hook and prevents a received portion of the solar panel frame from disengaging from the first hook and/or the second hook.

15. The system according to any of the preceding claims 8 - 14, wherein the base plate is extended beyond the first and/or second hook and further comprises one or more cable management formations, outward of the first (510) and/or second hook (520), e.g. raised cable management ribs (515), preferably two ribs, wherein in between a rib and a hook and/or in between two ribs a cable receiving space (516) is defined for management of one or more cables, preferably wherein the one or more raised ribs each comprise a flattened top end (517) and the flattened top end is configured to allow a part of a solar panel frame to rest upon and guide towards the second hook (520) during installation.

16. A support structure, e.g. a roof (90), e.g. a slanted roof, provided with the solar panel installation system according to any one or more of the preceding claims 8 - 15, wherein the system, preferably, comprises a pair of first, e.g. lower solar panel installation brackets (100) and a pair of second, e.g. upper, solar panel installation brackets (110).
